# EUROPÄISCHE PATENTSCHRIFT

(11) **EP 1 679 202 B1**
(45) Veröffentlichungstag und Bekanntmachung des Hinweises auf die Patenterteilung: **24.08.2011**
(21) Anmeldenummer: 05022500.2
(22) Anmeldetag: 14.10.2005
(51) Int. Cl.: B60B 7/16, F16B 41/00

(54) **Diebstahlschutzeinrichtung für Räder, insbesondere für Leichtmetallräder von Kraftfahrzeugen**
Theft protection device for wheels, in particular for light alloy wheels of motor vehicles
Dispositif protecteur de vol pour des roues, en particulier pour des roues d'alliage léger des automobiles

(30) Priorität: 07.01.2005 DE 102005000940
(43) Veröffentlichungstag der Anmeldung: 12.07.2006
(73) Patentinhaber: AUDI AKTIENGESELLSCHAFT, 85045 Ingolstadt (DE)
(72) Erfinder: Sola Gomfaus, Andreu, 85049 Ingolstadt (DE); Liese, Florian, 81675 München (DE)
(74) Vertreter: Asch, Konrad

(56) Entgegenhaltungen:
- DE-A1- 3 233 889
- DE-A1- 3 505 145
- DE-A1- 19 812 827
- DE-U1- 29 711 473
- GB-A- 2 047 371
- US-B1- 6 419 326

## Beschreibung

Die Erfindung betrifft eine Diebstahlschutzeinrichtung für Räder, insbesondere für Leichtmetallräder, von Kraftfahrzeugen nach dem Oberbegriff des Anspruchs 1.

Räder für Kraftfahrzeuge, die auch als "Felge" bezeichnet werden, sind allgemein bekannt und weisen einen sogenannten Radkörper auf, der einen die eigentliche Felge darstellenden Felgenring trägt. Zur Befestigung der Räder am Fahrzeug wird der Radkörper mittels sogenannter Radschrauben mit einer fahrzeugseitigen Radnabe, insbesondere einer Flanschnabe der Radnabe fest und zentrisch verbunden. Diese Schraubverbindungen sollen schnell lösbar und festziehbar sein. Jeder Radkörper weist einen zentralen, der fahrzeugseitigen Radnabe zuordenbaren Radkörper-Nabenbereich auf, um den herum im Radkörper eine Mehrzahl von voneinander beabstandeten, insbesondere gleichmäßig beabstandeten Schraubendurchgangsöffnungen für die Radschrauben ausgebildet sind. Der Radkörper selbst kann scheibenartig als Radscheibe ausgebildet sein, der mit dem Felgenring z. B. mittels einer Schweißverbindung verbunden ist. Daneben ist es auch allgemein bekannt, den Felgenring und den Radkörper aus einem Stück zu gießen oder zu schmieden, und zwar unter Verwendung von Leichtmetall-Legierungen. Derartige Leichtmetallräder weisen regelmäßig auf ihrer Sichtseite ein Design auf, bei dem ein zentraler Radkörper-Nabenbereich, der auch eine Öffnung aufweisen kann, im wesentlichen rund ausgebildet ist und mittels mehrerer Rippen oder Stege, die ein sogenannte Mehrspeichen- oder Mehrarm-Design ausbilden, mit dem Felgenring einstückig verbunden sind.

Insbesondere in Verbindung mit derartigen Leichtmetall-Rädern ist die Gefahr des Diebstahles der Räder relativ groß, so dass es bereits allgemein bekannt ist, in Verbindung mit Rädern von Kraftfahrzeugen sogenannte Diebstahlsicherungen vorzusehen. So ist es beispielsweise allgemein bekannt, wenigstens einen Teil der Radschrauben im Bereich des Schraubenkopfes so zu gestalten, dass diese nur mit einem Spezialwerkzeug gelöst werden können. Des weiteren ist es allgemein bekannt, abschließbare Radschrauben vorzusehen, bei denen die Radschrauben mittels einem Zylinderschloss so abschließbar sind, dass ein unbefugtes Lösen der Radschrauben wesentlich erschwert wird.

Des weiteren ist es aus der gattungsgemäßen DE 32 33 889 A1 bekannt, zur Diebstahlsicherung von Rädern eine verschließbare Abdeckplatte vorzusehen, die im verriegelten Zustand die Radschrauben überdeckt.

Demgegenüber ist es Aufgabe der Erfindung, eine alternative Diebstahlschutzeinrichtung für Räder, insbesondere für Leichtmetallräder, von Kraftfahrzeugen zu schaffen, die neben einem sehr guten Diebstahlschutz für die Räder auch eine optisch besonders ansprechende Gestaltung aufweist.

Diese Aufgabe wird gelöst mit den Merkmalen des Patentanspruchs 1.

Gemäß Anspruch 1 ist im Bereich des Radkörper-Nabenbereichs eine der Anzahl der Radschrauben entsprechende Anzahl von fingerartigen, die Abdeckeinrichtung ausbildenden Schwenkarmen schwenkbar angelenkt, die im montierten Zustand des Rades mittels einer Halteeinrichtung in einer die jeweils zugeordnete Radschraube abdeckenden Abdeckstellung zugriffssicher gehalten sind und die zur Freigabe der jeweils zugeordneten Radschraube unter Lösen der Halteverbindung der Halteeinrichtung in eine Freigabestellung verschwenkbar sind.

Ein derartiger Aufbau einer Diebstahlsicherung mit Schwenkarmen ist insbesondere in Verbindung mit solchen Rädern von Kraftfahrzeugen von Vorteil, die ein Mehrarm- bzw. Mehrspeichendesign aufweisen, da sich eine derartige Gestaltung dann als wiederkehrendes Element vorteilhaft in die Gesamtgestaltung eines Rades einfügt. Damit kann ein besonders hochwertiger optischer Gesamteindruck erzielt werden. Des weiteren wird mit einem derartigen erfindungsgemäßen mehrarmigen, insbesondere sternförmigen Aufbau der Diebstahlschutzeinrichtung auch ein besonders wirksamer Diebstahlschutz in der Abdeckstellung der Schwenkarme erzielt, da jede der Radschrauben separat gesichert ist. Unter einer Halteeinrichtung ist im weiteren Sinne jedes Mittel bzw. jede Maßnahme zu verstehen, die die Schwenkarme in ihrer Schutz- bzw. Abdeckstellung hält und die die Schwenkarme zu deren Verschwenkung in die Freigabestellung freigeben kann.

Besonders bevorzugt ist nach Anspruch 2 eine Ausgestaltung, bei der die Schwenkarme an einer den Radkörper-Nabenbereich ausbildenden und/oder abdeckenden Radkörper-Nabenabdeckung schwenkbar angelenkt sind. Die Radkörper-Nabenabdeckung ist hier vorzugsweise im wesentlichen rund ausgebildet und kann grundsätzlich integraler Bestandteil des Radkörpers sein. Darüber hinaus kann die Radkörper-Nabenabdeckung aber auch als separates Bauteil ausgebildet sein, das entweder dauerhaft am Radkörper unlösbar festgelegt ist, wobei diese unlösbare Festlegung vorzugsweise ortsfest erfolgt. Grundsätzlich ist jedoch auch eine solche unlösbare Festlegung der Radkörper-Nabenabdeckung am Radkörper möglich, bei der die Radkörper-Nabenabdeckung innerhalb vorgebbarer Einstellbereiche relativ zum Radkörper verlagerbar ist, z. B. verdrehbar ist. Dies kann z. B. in Verbindung mit einer Freigabe der Arretierung der Schwenkarme erforderlich sein, falls diese in ihre Freigabestellung überführt werden sollen. Die Freigabe der Relativbewegung der Radkörper-Nabenabdeckung zum Radkörper kann dann ebenfalls wieder mittels einer Verriegelungseinrichtung, z. B. einem Zylinderschloss mit entsprechend zugeordnetem Schlüssel, gesichert sein. ln diesem Zusammenhang wäre es grundsätzlich auch möglich, die Radkörper-Nabenabdeckung als separates Bauteil mittels z. B. einer derartigen Verriegelungseinrichtung unlösbar gegen unbefugtes Entfernen am Radkörper festzulegen. Ein derartiger Aufbau, bei dem die Schwenkarme an einem als separaten Bauteil ausgebildeten Radkörper-Nabenabdeckung schwenkbar angelenkt sind, hat den Vorteil, dass die Diebstahlschutzeinrichtung hier unabhängig vom Rad selber hergestellt werden kann, wobei lediglich am Radkörper selber zur Festlegung der Radkörper-Nabenabdeckung entsprechende Befestigungsmittel vorzusehen sind. Für den Fall, dass der zentrale Radkörper-Nabenbereich eine Nabenöffnung aufweist, kann die Festlegung hier entsprechend öffnungsrandseitig erfolgen.

Besonders vorteilhaft ist hierbei nach Anspruch 3 für eine einfache Gestaltung und einen einfachen Aufbau vorgesehen, dass die Radkörper-Nabenabdeckung gegenüber dem Radkörper erhaben ausgebildet ist, wobei die Schwenkarme dann in einem Randbereich der Radkörper-Nabenabdeckung einfachst angelenkt werden können und entsprechend sternförmig in Richtung zu den jeweiligen Radschrauben wegragen. Es versteht sich, dass ein gleichmäßiger Abstand der einzelnen Radschrauben auch einen gleichen Abstand der einzelnen Schwenkarme bedingt, die für ein ansprechendes Design selbstverständlich als Gleichteile ausgebildet sind.

Um in Verbindung mit einer derartigen, eine Nabenkappe bildenden Radkörper-Nabenabdeckung in üblicher Weise ein im Nabenbereich des Rades angeordnetes Firmenemblem oder dergleichen anbringen zu können, ist nach Anspruch 4 vorgesehen, dass die Radkörper-Nabenabdeckung einen Emblemträger ausbildet, der ein Emblem, wie z. B. ein Firmenemblem trägt, das darauf lösbar oder unlösbar angeordnet ist. Insbesondere kann das Emblem direkt in die Radkörper-Nabenabdeckung eingearbeitet sein.

Eine besonders einfache und vorteilhafte sowie dauerhafte Freigabe der Radschrauben in deren Freigabestellung wird dadurch erreicht, dass nach Anspruch 5 die Schwenkarme mittels eines Energiespeichers in Richtung Freigabestellung vorgespannt sind, so dass die Schwenkarme bei einer Freigabe der Halteverbindung der Halteeinrichtung kraftbeaufschlagt und selbsttätig in die Freigabestellung verschwenkbar sind. Besonders einfach und kostengünstig ist nach Anspruch 6 der Energiespeicher durch ein Federelement gebildet, wobei ein besonders hochwertiger und funktionsintegrierter Aufbau mit geringem Bauteilaufwand dadurch erreicht wird, dass nach Anspruch 7 das Federelement im Bereich der Schwenkachse der Schwenkarme angeordnet ist und bevorzugt durch ein Ringfederelement gebildet ist. Durch eine derartige Vorspannung der Schwenkarme in Richtung Freigabestellung ist sichergestellt, dass die Schwenkarme selbsttätig in ihrer Freigabestellung gehalten werden, so dass die Radschrauben für eine Montage sehr gut und bequem für einen Werker zugänglich sind.

Die Halteeinrichtung ist nach Anspruch 9 bevorzugt durch wenigstens eine mittels einer Betätigungseinrichtung betätigbare Verriegelungseinrichtung mit einem schwenkarmseitigen Verriegelungselement und einem radkörperseitigen Verriegelungsgegenelement gebildet, die bei einer Betätigung der Betätigungseinrichtung miteinander außer und/oder in Eingriff bringbar sind. Die Verriegelungseinrichtung mitsamt Betätigungseinrichtung kann z. B. durch ein herkömmliches Schloss, insbesondere Zylinderschloss mit zugeordnetem Schlüssel gebildet sein, wobei hier dann einerseits jedem Schwenkarm eine separate Verriegelungseinrichtung zugeordnet sein kann oder aber auch alternativ eine zentrale Verriegelungseinrichtung für sämtliche Schwenkarme vorgesehen sein kann. Ein besonders einfacher und funktionssicherer Aufbau sieht nach Anspruch 9 vor, dass das radkörperseitige Verriegelungsgegenelement z. B. durch einen am Radkörper, insbesondere im Bereich des Radkörper-Nabenbereichs verlagerbar gelagerten Riegel gebildet ist, der bei einer Betätigung der Betätigungseinrichtung außer Eingriff mit dem schwenkarmseitigen Verriegelungselement gelangt und damit die Verschwenkung der Schwenkarme in deren Freigabestellung freigibt. Der Aufbau ist hier vorzugsweise so gestaltet, dass bei einer Rückschwenkung der Schwenkarme in deren Abdeckstellung der Riegel wieder in Eingriff mit dem schwenkarmseitigen Verriegelungselement gebracht werden kann, wobei dieses vorzugsweise selbsttätig durch die Rückschwenkbewegung des Schwenkarmes und daher im weiteren Sinne "automatisiert" erfolgen kann. Die Rückschwenkbewegung kann z. B. durch manuelles Zurückdrücken der Schwenkarme in ihre Abdeckstellung erfolgen.

Besonders bevorzugt ist nach Anspruch 10 eine als Fernsteuereinrichtung ausgebildete Betätigungseinrichtung vorgesehen, mittels der die Verriegelungseinrichtung z. B. durch Funk, Infrarot etc., angesteuert werden kann, um z. B. die Verriegelung der Schwenkarme in deren Abdeckstellung freizugeben. Grundsätzlich könnte der Aufbau der Diebstahlschutzeinrichtung hier auch so erfolgen, dass durch ein nochmaliges Betätigen der Betätigungseinrichtung, z. B. mittels der Fernsteuereinrichtung, die Schwenkarme auch wieder entsprechend signalgesteuert in ihre Abdeckstellung überführt werden. Eine derartige Verriegelungseinrichtung mitsamt Fernsteuerung bildet eine sehr hochwertige und einfache Möglichkeit der Bedienung der Diebstahlschutzeinrichtung und damit auch eine hochwertige Alternative zur Verriegelung der Schwenkarme mittels einer Schlüssel-Schlossvorrichtung.

Gemäß einer weiteren besonders bevorzugten Ausgestaltung ist nach Anspruch 11 vorgesehen, dass die Schwenkarme an ihren freien Endbereichen jeweils eine einer Schraubenkopfausnehmung einer Radschraube zugeordnete Eingriffsnase aufweisen, die in der Abdeckstellung der Schwenkarme in die Schraubenkopfausnehmung eingreift. Dadurch wird eine funktionssichere und einfache Fixierung der Schwenkarme in deren Abdeckstellung erreicht. Bevorzugt ist dabei die Eingriffsnase nach Anspruch 12 so ausgebildet, dass diese formschlüssig in die entsprechend gestaltete Schraubenkopfausnehmung eingreift.

Alternativ oder zusätzlich dazu kann nach Anspruch 13 auch vorgesehen sein, dass die Schwenkarme an ihren freien Endbereichen jeweils einen einem Schraubenkopf einer Radschraube zugeordneten Ringabschnitt aufweisen, der in der Abdeckstellung der Schwenkarme den Schraubenkopf an seiner Außenseite wenigstens teilweise umgreift. Auch hierdurch lässt sich somit wieder eine einfache und funktionssichere Fixierung und Festlegung der Schwenkarme in deren Abdeckstellung erzielen, was nach Anspruch 14 insbesondere auch dadurch erreicht wird, dass der Ringabschnitt die Schraubenkopf-Außenseite formschlüssig umgreift. Für dieses Umgreifen ist es erforderlich, dass der Schraubenkopf im eingeschraubten Zustand der Radschraube wenigstens mit einem oberen Kopfende gegenüber der Radkörperebene erhaben ist oder im Falle einer Einbettung des Schraubenkopfes in den Radkörper im angrenzenden Radkörperbereich eine dem Ringabschnitt entsprechende Ausnehmung aufweist. Der Ringabschnitt selber kann zudem als gestalterisches Element den optischen Gesamteindruck der Diebstahlsicherung insgesamt aufwerten.

Die Erfindung wird nachfolgend anhand einer Zeichnung näher erläutert.

Es zeigen:
- **Fig. 1**: eine schematische, perspektivische Darstellung eines zentralen Radkörper-Nabenbereichs eines nur ausschnittsweise dargestellten Radkörpers mit den Radkörper-Nabenbereich umgebenden Radschraubenkranz und erfindungsgemäßer Diebstahlschutzeinrichtung in einer Schutz- bzw. Abdeckstellung, und
- **Fig. 2**: eine schematische Darstellung entsprechend **Fig. 1** mit in eine Freigabestellung verschwenkten Schwenkarmen.

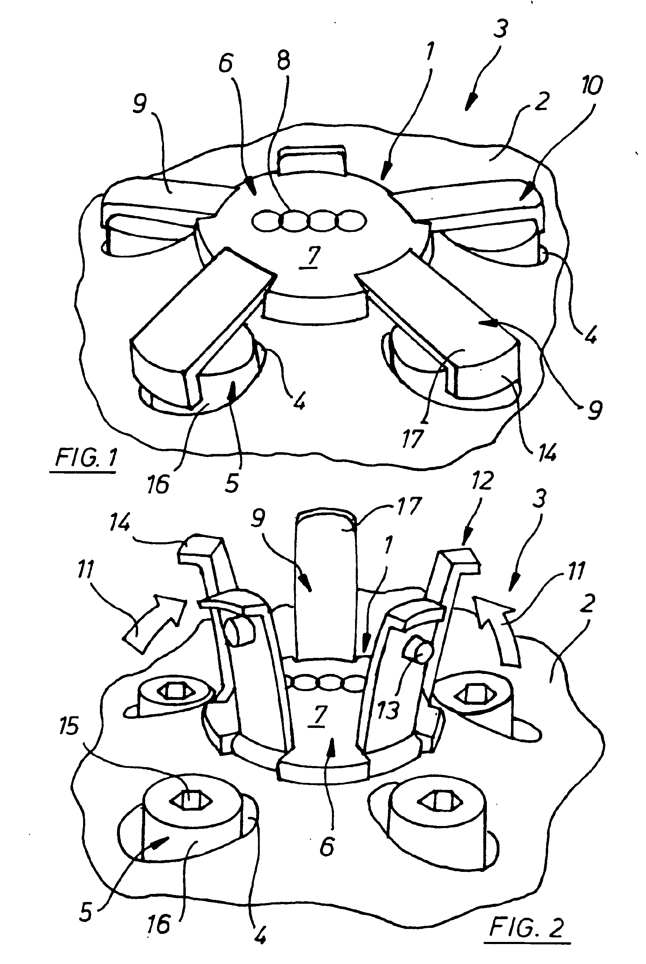

In **Fig. 1** ist schematisch ein zentraler, einer fahrzeugseitigen Radnabe zuordenbarer Radkörper-Nabenbereich 1 eines hier nicht vollständig gezeigten Radkörpers 2 eines z. B. als Leichtmetallrad hergestellten Rades 3 gezeigt. Um den Radkörper-Nabenbereich 1 herum sind zur Ausbildung eines sogenannten Schraubkranzes hier beispielhaft fünf voneinander jeweils gleich beabstandete Schraubendurchgangsöffnungen 4 ausgebildet. Durch diese Schraubendurchgangsöffnungen 4 hindurch werden Radschrauben 5, die hier beispielhaft als Inbusschrauben ausgebildet sind, gesteckt und in herkömmlicher Weise mit der hier nicht gezeigten fahrzeugseitigen Radnabe lösbar verbunden, um den Radkörper 2 fahrzeugseitig festzulegen. Unter fahrzeugseitiger Radnabe wird hier jegliche fahrzeugseitige Anbindungsstelle für einen einen zentralen Radkörper-Nabenbereich aufweisenden Radkörper verstanden, wobei der Radkörper-Nabenbereich als solches auch durch eine herkömmliche Nabenöffnung ausgebildet sein kann.

Als Diebstahlschutzeinrichtung 6 ist am Radkörper-Nabenbereich 1 eine denselben ausbildende bzw. abdeckende Radkörper-Nabenabdeckung 7 festgelegt, z. B. mittels einer hier nicht dargestellten Schließvorrichtung ortsfest festgelegt. Diese als separates Bauteil ausgebildete Radkörper-Nabenabdeckung 7 ist im wesentlichen rund ausgebildet und weist mittig und zentral ein Firmenemblem 8 auf.

Die Radkörper-Nabenabdeckung 7 der Diebstahlschutzeinrichtung 6 ist gegenüber der Radkörperebene erhaben und weist ferner randseitig schwenkbar angelenkte Schwenkarme 9 auf, die in ihrer in der **Fig. 1** gezeigten Schutz- bzw. Abdeckstellung 10 die jeweils zugeordneten Radschrauben 5 ab- und überdecken. Die Schwenkarme 9 sind in ihrer in der **Fig. 1** gezeigten Abdeckstellung mittels einer hier nicht dargestellten Halte- bzw. Arretiereinrichtung lösbar arretiert. Diese Halte- bzw. Arretiereinrichtung, die z. B. mittel einer hier ebenfalls nicht dargestellten Betätigungseinrichtung ferngesteuert bedienbar sein kann, weist z. B. entsprechende Verriegelungselemente auf, die bei einer Betätigung der Betätigungseinrichtung die Halteverbindung der Schwenkarme 9 freigibt, so dass diese entsprechend den Pfeilen 11 in der **Fig. 2**, vorzugsweise federvorgespannt in ihre die Radschrauben 5 für eine freie Zugänglichkeit derselben freigebende Freigabestellung 12 aufschwenkbar sind. Beispielsweise können die Schwenkarme 9 im Bereich ihrer nabenabdeckungsseitigen Schwenkachsen federbeaufschlagt sein, um die Schwenkarme 9 in ihrer Freigabestellung 12 zu halten.

Die Diebstahlschutzeinrichtung 6 ist hier z. B. so ausgebildet, dass zur Rücküberführung der Schwenkarme 9 aus der in der **Fig. 2** gezeigten Freigabestellung 12 in die in der **Fig. 1** gezeigte Abdeckstellung diese von Hand wieder zurückgeschwenkt bzw. zurückgedrückt werden und anschließend eine erneute Verriegelung der Schwenkarme 9 in der in der **Fig. 1** gezeigten Abdeckstellung 10 erfolgt. Diese Verriegelung kann z. B. im wesentlichen selbsttätig durch Ausnutzung der Rückschwenkbewegung erfolgen oder aber auch separat durch Verriegelung mittels einer Betätigungseinrichtung, wie z. B. einer Schlüssel-Schlossvorrichtung oder einer Fernsteuereinrichtung, die ein entsprechendes Verriegelungssignal an eine Verriegelungseinrichtung abgibt.

Wie dies der **Fig. 2** weiter zu entnehmen ist, weisen die Schwenkarme 9 an ihren freien Enden 17 jeweils eine Eingriffsnase 13 und beabstandet davon endseitig einen Teilringabschnitt 14 auf. In der Abdeckstellung 10 der Schwenkarme 9 greift die Eingriffsnase 13 in eine Inbusausnehmung 15 eines runden Schraubenkopfs 16 der Radschraube 5 ein, während der Teilringabschnitt 14 den Schraubenkopf 16 in einem gegenüber dem Radkörper 2 vorstehenden Außenumfangsbereich des Schraubenkopfes 16 im wesentlichen formschlüssig umgreift.

Die hier nicht dargestellte und zuvor lediglich ganz allgemein beschriebene Halte- bzw. Arretier- bzw. Verriegelungseinrichtung kann dabei grundsätzlich an verschiedenen Positionen im Bereich der Diebstahlschutzeinrichtung 6 sowie dem dieser zugeordneten Radkörperbereich angeordnet bzw. ausgebildet sein, so z. B. im Bereich der Schwenkachsen der Schwenkarme 9 und/oder im Bereich der freien Endbereiche 17 der Schwenkarme 9, z. B. in Verbindung mit dem Teilringabschnitt 14, der dann ggf. konstruktiv anders gestaltet ist als dies in den lediglich eine Prinzipdarstellung darstellenden **Fig. 1 und 2** der Fall ist.

An den hier in den **Fig. 1 und 2** dargestellten Radkörperausschnitt mit zentralem Radkörper-Nabenbereich 1 können sich z. B. in Verlängerung der Schwenkarme 9 Speichen bzw. Arme des Radkörpers 2 anschließen, die einen die eigentliche Felge ausbildenden Felgenring tragen, was hier allerdings nicht dargestellt ist.

## Patentansprüche

1. Diebstahlschutzeinrichtung für Räder, insbesondere für Leichtmetallräder von Kraftfahrzeugen,
mit einem einen Radkörper aufweisenden Rad, der einen zentralen einer fahrzeugseitigen Radnabe zuordenbaren Radkörper-Nabenbereich aufweist, um den herum im Radkörper eine Mehrzahl von voneinander beabstandeten Schraubendurchgangsöffnungen für Radschrauben, mittels denen der Radkörper lösbar mit der Radnabe verbindbar ist, ausgebildet ist, und
mit einer die Radschrauben im montierten Zustand des Rades abdeckenden Abdeckeinrichtung,
**dadurch gekennzeichnet,**
**dass** im Bereich des Radkörper-Nabenbereichs (1) eine der Anzahl der Radschrauben (5) entsprechende Anzahl von fingerartigen, die Abdeckeinrichtung ausbildenden Schwenkarmen (9) schwenkbar angelenkt ist, die im montierten Zustand des Rades (3) mittels einer Halteeinrichtung in einer die jeweils zugeordnete Radschraube (5) abdeckenden Schutz- bzw. Abdeckstellung (10) gehalten sind und die zur Freigabe der jeweils zugeordneten Radschraube (5) unter Lösen der Halteverbindung der Halteeinrichtung in eine Freigabestellung verschwenkbar sind.

2. Diebstahlschutzeinrichtung nach Anspruch 1, **dadurch gekennzeichnet,**
**dass** die Schwenkarme (9) an einer den Radkörper-Nabenbereich (1) ausbildenden und/oder abdeckenden Radkörper-Nabenabdeckung (7) schwenkbar angelenkt sind, und
**dass** die Radkörper-Nabenabdeckung (7) als separates Bauteil unlösbar und vorzugsweise ortsfest am Radkörper (2) montiert oder montierbar ist oder dass die Radkörper-Nabenabdeckung (7) integral mit dem Radkörper (2) ausgebildet ist.

3. Diebstahlschutzeinrichtung nach Anspruch 1 oder Anspruch 2, **dadurch gekennzeichnet,**
**dass** die Radkörper-Nabenabdeckung (7) gegenüber dem Radkörper (2) erhaben ist, und
**dass** die Schwenkarme (9) von einem Randbereich der Radkörper-Nabenabdeckung (7) sternförmig in Richtung zu den jeweiligen Radschrauben (5) wegragen.

4. Diebstahlschutzeinrichtung nach Anspruch 2 oder Anspruch 3, **dadurch gekennzeichnet, dass** die Radkörper-Nabenabdeckung (7) als Emblemträger ausgebildet ist und ein Emblem trägt, das darauf lösbar oder unlösbar angeordnet ist.

5. Diebstahlschutzeinrichtung nach einem der Ansprüche 1 bis 4, **dadurch gekennzeichnet, dass** die Schwenkarme (9) mittels eines Energiespeichers in Richtung Freigabestellung (12) vorgespannt sind dergestalt, dass die Schwenkarme (9) bei einer Freigabe der Halteverbindung der Halteeinrichtung kraftbeaufschlagt und selbsttätig in die Freigabestellung verschwenkbar sind.

6. Diebstahlschutzeinrichtung nach Anspruch 5, **dadurch gekennzeichnet, dass** der Energiespeicher durch ein Federelement gebildet ist.

7. Diebstahlschutzeinrichtung nach Anspruch 6, **dadurch gekennzeichnet, dass** das Federelement im Bereich der Schwenkachse der Schwenkarme (9) angeordnet ist und vorzugsweise durch ein Ringfederelement gebildet ist.

8. Diebstahlschutzeinrichtung nach einem der Ansprüche 1 bis 7, **dadurch gekennzeichnet, dass** die Halteeinrichtung durch wenigstens eine mittels einer Betätigungseinrichtung betätigbare Verriegelungseinrichtung mit einem schwenkarmseitigen Verriegelungselement und einem radkörperseitigem Verriegelungsgegenelement gebildet ist, die bei einer Betätigung der Betätigungseinrichtung miteinander außer und/oder in Eingriff bringbar sind.

9. Diebstahlschutzeinrichtung nach Anspruch 8, **dadurch gekennzeichnet,**
**dass** das radkörperseitige Verriegelungsgegenelement durch einen am Radkörper (2), insbesondere im Bereich des Radkörper-Nabenbereichs (1) verlagerbar gelagerten Riegel gebildet ist, der bei einer Betätigung der Betätigungseinrichtung außer Eingriff mit dem schwenkarmseitigen Verriegelungselement bringbar ist und damit die Verschwenkung der Schwenkarme (9) in deren Freigabestellung freigibt, und
**dass** der Riegel bei einer Rückschwenkung der Schwenkarme (9) in deren Abdeckstellung (10) wieder in Eingriff mit dem schwenkarmseitigen Verriegelungselement bringbar ist, vorzugsweise selbsttätig durch die Rückschwenkbewegung des Schwenkarmes (9).

10. Diebstahlschutzeinrichtung nach Anspruch 8 oder Anspruch 9, **dadurch gekennzeichnet, dass** die Betätigungseinrichtung als Fernsteuereinrichtung ausgebildet ist, mittels der die Verriegelungseinrichtung vorzugsweise durch Funk, Infrarot etc. ansteuerbar ist.

11. Diebstahlschutzeinrichtung nach einem der Ansprüche 1 bis 10, **dadurch gekennzeichnet, dass** die Schwenkarme (9) an ihrem freien Endbereichen (17) jeweils eine einer Schraubenkopfausnehmung (15) einer Radschraube (5), insbesondere Inbusschraube, zugeordnete Eingriffsnase (13) aufweisen, die in der Abdeckstellung (10) der Schwenkarme (9) in die Schraubenkopfausnehmung (15) eingreift.

12. Diebstahlschutzeinrichtung nach Anspruch 11, **dadurch gekennzeichnet, dass** die Eingriffsnase (13) so ausgebildet ist, dass diese formschlüssig in die Schraubenkopfausnehmung (15) eingreift.

13. Diebstahlschutzeinrichtung nach einem der Ansprüche 1 bis 12, **dadurch gekennzeichnet, dass** die Schwenkarme (9) an ihren freien Endbereichen (17) jeweils einen einem Schraubenkopf (16) einer Radschraube (5) zugeordneten Ringabschnitt (14) aufweisen, der in der Abdeckstellung (10) der Schwenkarme (9) den Schraubenkopf an seiner Außenseite wenigstens teilweise umgreift.

14. Diebstahlschutzeinrichtung nach Anspruch 13, **dadurch gekennzeichnet, dass** der Ringabschnitt (14) die Schraubenkopf-Außenseite formschlüssig umgreift.

## Claims

1. Theft protection device for wheels, in particular for light alloy wheels of motor vehicles,
with a wheel which has a wheel body and has a central wheel-body hub region which can be assigned to a wheel hub on the vehicle and around which a plurality of spaced-apart screw passage openings for wheel screws, by means of which the wheel body can be connected releasably to the wheel hub, are formed in the wheel body, and
with a covering device which covers the wheel bolts in the fitted state of the wheel,
**characterized in that** a number of finger-like pivoting arms (9) corresponding to the number of wheel bolts (5) are coupled pivotably in the region of the wheel-body hub region (1), the pivoting arms forming the covering device and, in the fitted stated of the wheel (3) being held by means of a holding device in a protective or covering position (10) covering the respectively assigned wheel bolt (5) and, in order to unblock the respectively assigned wheel bolt (5), being pivotable, with the holding connection of the holding device being released, into an unblocking position.

2. Theft protection device according to Claim 1, **characterized in that** the pivoting arms (9) are coupled pivotably to a wheel-body hub covering (7) which forms and/or covers the wheel-body hub region (1), and **in that** the wheel-body hub covering (7) is or can be fitted as a separate component nonreleasably and preferably in a fixed position to the wheel body (2), or **in that** the wheel-body hub covering (7) is formed integrally with the wheel body (2).

3. Theft protection device according to Claim 1 or Claim 2, **characterized in that** the wheel-body hub covering (7) is raised in relation to the wheel body (2), and **in that** the pivoting arms (9) project away from an edge region of the wheel-body hub covering (7) in the direction of the respective wheel bolts (5) in a star-shaped manner.

4. Theft protection device according to Claim 2 or Claim 3, **characterized in that** the wheel-body hub covering (7) is designed as an emblem carrier and carries an emblem which is arranged releasably or nonreleasably thereon.

5. Theft protection device according to one of Claims 1 to 4, **characterized in that** the pivoting arms (9) are prestressed in the direction of the unblocking position (12) by means of an energy accumulator in such a manner that, when the holding connection of the holding device is unblocked, the pivoting arms (9) are subjected to the action of a force and can be pivoted automatically into the unblocking position.

6. Theft protection device according to Claim 5, **characterized in that** the energy accumulator is formed by a spring element.

7. Theft protection device according to Claim 6, **characterized in that** the spring element is arranged in the region of the pivot axis of the pivoting arms (9) and is preferably formed by an annular spring element.

8. Theft protection device according to one of Claims 1 to 7, **characterized in that** the holding device is formed by at least one locking device which can be actuated by means of an actuating device and has a locking element on the pivoting arm and a locking counter element on the wheel body, which elements can be brought out of and/or into engagement with each other upon actuation of the actuating device.

9. Theft protection device according to Claim 8, **characterized in that** the locking counter element on the wheel body is formed by a bolt which is mounted displaceably on the wheel body (2), in particular in the region of the wheel-body hub region (1) and can be brought out of engagement with the locking element on the pivoting arm upon actuation of the actuating device and therefore unblocks the pivoting of the pivoting arms (9) into the unblocking position thereof, and **in that**, when the pivoting arms (9) pivot back into the covering position (10) thereof, the bolt can be brought again into engagement with the locking element on the pivoting arm, preferably automatically by the pivoting-back movement of the pivoting arm (9).

10. Theft protection device according to Claim 8 or Claim 9, **characterized in that** the actuating device is designed as a remote control device by means of which the locking device can be activated, preferably wirelessly, by infrared, etc.

11. Theft protection device according to one of Claims 1 to 10, **characterized in that** the free end regions (17) of the pivoting arms (9) each have an engagement lug (13) which is assigned to a bolt head recess (15) of a wheel bolt (5), in particular hexagon socket bolt, and which engages in the bolt head recess (15) in the covering position (10) of the pivoting arms (9).

12. Theft protection device according to Claim 11, **characterized in that** the engagement lug (13) is designed so as to engage in the bolt head recess (15) in a form-fitting manner.

13. Theft protection device according to one of Claims 1 to 12, **characterized in that** the free end regions (17) of the pivoting arms (9) each have an annular section (14) which is assigned to a bolt head (16) of a wheel bolt (5) and at least partially engages around the outside of the bolt head in the covering position (10) of the pivoting arms (9).

14. Theft protection device according to Claim 13, **characterized in that** the annular section (14) engages around the outside of the bolt head in a form-fitting manner.

## Revendications

1. Dispositif antivol pour roues, en particulier pour les roues en métal léger de véhicules,
avec une roue présentant un corps de roue, laquelle roue présente une zone de moyeu de corps de roue centrale affectable à un moyeu de roue côté véhicule, autour de laquelle est formée, dans le corps de roue, une pluralité d'ouvertures espacées les unes des autres pour le passage de vis de roue au moyen desquelles le corps de roue peut être relié de manière amovible au moyeu de roue, et
avec un dispositif de recouvrement recouvrant les vis de roue à l'état monté de la roue,
**caractérisé en ce que**,
au niveau de la zone de moyeu du corps de roue (1), un nombre de bras pivotants (9) en forme de doigt formant le dispositif de recouvrement, correspondant au nombre des vis de roue (5), est articulé de manière pivotante, lesquels bras pivotants, à l'état monté de la roue (3), sont maintenus à l'aide d'un dispositif de maintien dans une position de protection ou de recouvrement (10) recouvrant la vis de roue (5) respectivement affectée et lesquels, pour libérer la vis de roue (5) respectivement affectée, peuvent pivoter dans une position de libération par le déblocage de la liaison de maintien du dispositif de maintien.

2. Dispositif antivol selon la revendication 1, **caractérisé en ce que** les bras pivotants (9) sont articulés de manière pivotante sur un couvercle de moyeu de corps de roue (7) formant et/ou recouvrant la zone de moyeu du corps de roue (1) et
**en ce que** le couvercle de moyeu de corps de roue (7) est monté ou montable en tant qu'élément séparé de manière inamovible, et de préférence fixe, sur le corps de roue (2), ou **en ce que** le couvercle de moyeu de corps de roue (7) est formé d'une seule pièce avec le corps de roue (2).

3. Dispositif antivol selon la revendication 1 ou la revendication 2, **caractérisé en ce que**
le couvercle de moyeu de corps de roue (7) est convexe par rapport au corps de roue (2), et
les bras pivotants (9) dépassent en étoile en direction des vis de roue (5) respectives depuis une zone périphérique du couvercle de moyeu de corps de roue (7).

4. Dispositif antivol selon la revendication 2 ou la revendication 3, **caractérisé en ce que** le couvercle de moyeu de corps de roue (7) est formé comme support d'emblème, et porte un emblème qui est disposé dessus amovible ou inamovible.

5. Dispositif antivol selon l'une des revendications 1 à 4, **caractérisé en ce que** les bras pivotants (9) sont précontraints au moyen d'un accumulateur d'énergie en direction de la position de libération (12), de telle sorte que les bras pivotants (9), en cas de libération de la liaison de maintien du dispositif de maintien, peuvent pivoter dans la position de libération sous l'effet d'une force et de manière automatique.

6. Dispositif antivol selon la revendication 5, **caractérisé en ce que** l'accumulateur d'énergie est formé par un élément élastique.

7. Dispositif antivol selon la revendication 6, **caractérisé en ce que** l'élément élastique est disposé dans la zone de l'axe de pivotement des bras pivotants (9) et formé de préférence par un élément élastique en anneau.

8. Dispositif antivol selon l'une des revendications 1 à 7, **caractérisé en ce que** le dispositif de maintien est formé par au moins un dispositif de verrouillage actionnable au moyen d'un dispositif d'actionnement avec un élément de verrouillage côté bras pivotant et un contre-élément de verrouillage côté corps de roue, qui, en cas d'actionnement du dispositif d'actionnement, peuvent être amenés hors prise et/ou en prise l'un avec l'autre.

9. Dispositif antivol selon la revendication 8, **caractérisé en ce que** le contre-élément de verrouillage côté corps de roue est formé par un verrou situé de manière déplaçable sur le corps de roue (2), en particulier au niveau de la zone de moyeu du corps de roue (1), lequel verrou peut, en cas d'actionnement du dispositif d'actionnement, être amené hors prise avec l'élément de verrouillage côté bras pivotant et libère ainsi le pivotement des bras pivotants (9) dans leur position de libération, et
**en ce que** le verrou, en cas de pivotement inverse des bras pivotants (9) dans leur position de recouvrement (10), peut être remis en prise avec l'élément de verrouillage côté bras pivotant, de préférence de manière automatique, par le mouvement de pivotement inverse du bras pivotant (9).

10. Dispositif antivol selon la revendication 8 ou la revendication 9, **caractérisé en ce que** le dispositif d'actionnement est formé comme un dispositif de télécommande au moyen duquel le dispositif de verrouillage est excitable de préférence par radio, infrarouge, etc.

11. Dispositif antivol selon l'une des revendications 1 à 10, **caractérisé en ce que** les bras pivotants (9) présentent respectivement, au niveau de leurs extrémités libres (17), un ergot de prise (13) affecté à un évidement pour tête de vis (15) d'une vis de roue (5), en particulier d'une vis à six pans creux, lequel ergot, dans la position de recouvrement (10) des bras pivotants (9) entre en prise dans l'évidement pour tête de vis (15).

12. Dispositif antivol selon la revendication 11, **caractérisé en ce que** l'ergot de prise (13) est formé de telle sorte que celui-ci entre en prise par liaison de forme dans l'évidement pour tête de vis (15).

13. Dispositif antivol selon l'une des revendications 1 à 12, **caractérisé en ce que** les bras pivotants (9) présentent, au niveau de leurs extrémités libres (17), respectivement une portion d'anneau (14) affectée à une tête de vis (16) d'une vis de roue (5) et qui, dans la position de recouvrement (10) des bras pivotants (9), entoure au moins partiellement la tête de vis au niveau de sa face extérieure.

14. Dispositif antivol selon la revendication 13, **caractérisé en ce que** la portion d'anneau (14) entoure par liaison de forme la face extérieure de la tête de vis.
